# EUROPEAN PATENT APPLICATION

(11) **EP 1 434 392 A2**
(43) Date of publication of application: **30.06.2004**
(21) Application number: 03300228.8
(22) Date of filing: 24.11.2003
(51) Int. Cl.: H04L 12/42, H04L 12/437

(54) **Topology management of dual ring network**

(30) Priority: 26.11.2002 US 303882
(71) Applicant: Alcatel Canada Inc., Kanata, Ontario K2K 2E6 (CA)
(72) Inventor: Damm, Gérard, Ottawa Onatrio K2A 1Z1 (CA); Zoranovic, Milan, Kanata Ontario K2T 1B1 (CA); Chen, Qunwei, Nepean Ontario K2B 7T2 (CA)
(74) Representative: Feray, Valérie

(57) **Abstract**

Among networks of ring configuration, the dual ring topology with source steering or wrapping capabilities offers numerous advantages over a single ring topology. In the management of a ring network, problems consist in making sure that every node in the ring is aware of the current ring topology. If, however, two or more links fail even in a dual ring network, the propagation of discovery packets is not guaranteed. A new topology discovery technique is disclosed. In accordance with one aspect of the invention, the algorithm uses only one discovery packet format and a set of timers for a variety of actions to be performed at each node on the ring. The protocol finds valuable applications in RPR and many similar network architectures.

## Description

The invention resides in the field of dual ring network management. In particular, it relates to techniques of topology discovery in telecommunications networks which comprise at least a pair of network rings, one for transporting packets in one direction and another in the opposite direction.

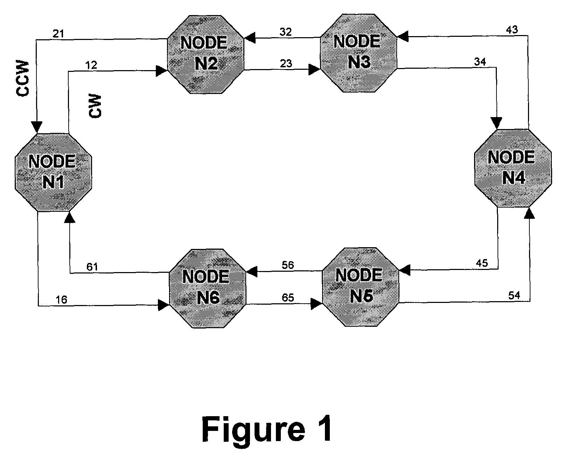

A variety of network architectures are available for designing and implementing a telecommunications network. The ring topology is found very frequently in network architectures. There are a number of topology discovery algorithms and commercial solutions for general logical topologies. Some examples are spanning tree algorithms for Ethernet and shortest path algorithms for general graph theory. There is, however, less focus on the specific ring architecture and the physical ring topology. The dual ring topology offers numerous advantages over a single ring topology, such as reliability and bandwidth flexibility to name a few. A telecommunications network in the dual ring topology uses two physically separated rings (also called ringlets), one for each traffic direction, clockwise (CW) and counterclockwise (CCW), as shown in Figure 1. In the figure, six nodes (also called stations), N1 to N6, are connected by a dual ing which comprises CW (clockwise) ring and CCW (counter clockwise) ring. Each of two digit numbers on the rings indicates a link between two numbered nodes and the direction of traffic. Therefore, link 43 carries traffic from nodes N4 to N3 and link 34 between the same nodes in the opposite direction.

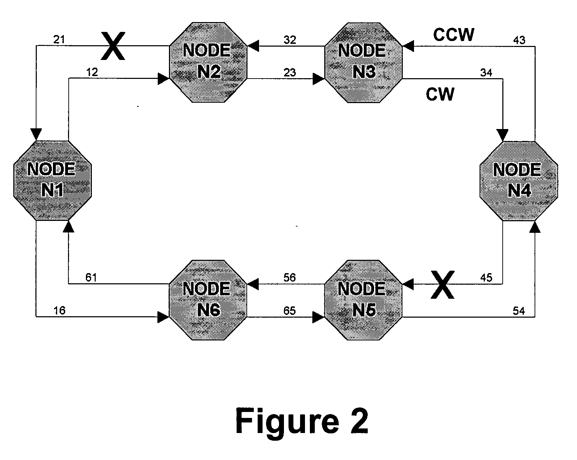

The bi-directional ring allows for two protection mechanisms to be implemented in case of media failure, such as link failure, or station failure, one being the ring wrap in FDDI (fiber distributed data interface) or SONET/SDH BLSR (Bidirectional Line Switched Ring) and another being the source steering in SONET UPSR (Unidirectional Path Switched Ring) where the source station selects which ringlet will carry the packet. The ring wrap basically consists in making a U-turn when a link failure is encountered. Figure 2 shows an example of wrapping: when a failure on link 21 is detected, node N2 wraps all the traffic which is to go on link 21 back onto link 23. In the source steering, all the nodes are made aware of a failure on one ring and any affected traffic is steered to the remaining ring at the source node.

In the management of a ring network, problems consist in making sure that every node in the ring is aware of the current ring topology (locations and identifications of all other nodes, link status between nodes, current node or link failures, recovery of failures, etc.). At initialisation of the network, there is a discovery phase where all the nodes fill their empty database. Then, there are database updates due to a new node insertion or an existing node removal, or due to a link or node failure. The database of each node needs to be adjusted accordingly. All the local databases must be synchronized as quickly as possible. Also, it is best to have a simple and non-centralized solution. The associated control information should be resilient itself to failures and should minimize usage of the bandwidth as well as the time needed to propagate the information.

U.S. Patent No. 5,590,124 Dec. 31, 1996 Robins describes a protocol for a ring interconnect architecture which defines data exchange operations (e.g., GET and PUT operations) between components associated with different nodes on the ring. The patent also describes a topology discovery protocol which uses data exchange operations for such a purpose. This protocol allows an instigator node to use the data transfer protocol to determine the topology of the ring architecture to which it is coupled. The protocol is not believed to be able to operate when one or more connections have failed in the ring. The patent is totally silent about such eventuality.

A new IEEE protocol is in the process of being defined (802.17) for a flexible and resilient dual ring topology which is called Resilient Pac ket Ring (RPR for short) and is a MAC layer protocol dedicated to ring architectures, especially for underlying Metro optical networks. Early 2002, there were two drafts for the RPR standard (named Darwin and Alladin).

Both drafts for RPR contain discovery algorithms. Darwin relies on broadcasting expanding control messages; that is to say, each node either originates a message or appends its own description to each message it receives from others. At the end of its life, each message has expanded up to contain the description of all the nodes in the ring. Updates are activated upon certain events (node/link status change, validation failure, timer expiration, etc.).

Alladin is based on two different kinds of messages (Hello and Status) and a database version number of each node. Hello messages are used by a node to transmit its database version number to its neighbors only. Status messages are broadcast by a node to update its status and version numbers of all other nodes on the ring, whenever there is a change of its status or a failure of connecting links.

An IEEE draft (802.17/D1.0) for RPR was published in August 2002 and it contains a topology discovery protocol. According to the protocol, at bring up, at any point that a node detects a change in local status, at any point that a node detects a new node on the ring, upon a change in protection status, and periodically a node broadcasts a topology message to all stations on the ring. The message contains all the information about the local node and when a node receives the message it updates its local topology image.

First of all, in the first two topology discovery protocols above (Alladin and Darwin), if two or more links fail in the ring, the propagation is not guaranteed in the case the wrapping mechanism is not implemented. Referring back to Figure 2, node N1 detects a failure on link (21) and broadcasts a message but never receives it back because of another failure on link 45.

In the Darwin solution, all nodes will append their information and originate their own broadcast message, but none will get it back to update their database. In the Alladin solution, the version numbers will not converge. In normal operation, with the Darwin solution, appending the information to each and every message is redundant and control bandwidth could be saved. As for the Alladin solution, it is more complex as it requires to maintain and compute a database version number at every node. With respect to the IEEE draft, when a link fails, the node that detects it generates two messages, Topology Discovery Message and Protection Message and broadcasts both of them. The information both of these messages contain is highly overlapped. The algorithm of the invention generates only one message that can be used for both, Topology Discovery and Protection purposes. Using two messages instead of one increases both, the processing and memory requirements at the node, as well as bandwidth utilization on the ring.

The present invention provides a method of communicating network topology information among nodes in a packet ring network comprising a plurality of nodes and links, said method having the advantage of being resilient, simple and of not using too much bandwidth.

More precisely, the present invention provides a method of communicating network topology information among nodes in a packet ring network comprising a plurality of nodes and links, each node holding a topology image of the network on a database, said method comprising steps of:
monitoring a topology discovery message on the ring;
determining that the topology discovery message is from itself, from neighboring nodes or it is a broadcast topology discovery message from any of other nodes;
updating a plurality of timer settings in response to the monitored topology discovery message if it is from itself, and
updating the database in response to the monitored topology discovery message if it is either from the neighboring nodes or from any of other nodes.

Thus, briefly stated, the invention uses only one discovery packet format and a set of timer settings, which controls a variety of actions at a node on the ring.

At initialization, a node announces its existence by broadcasting its nodal information and also sending a packet to itself. The timers are arbitrary set but will be updated when a discovery packet sent to itself is received.

After initialization, a node periodically sends a packet to itself so that timers can be updated.

During operation, a node also periodically broadcasts discovery packets to all the nodes on the ring so that database at each node can be continually up to date.

A node also constantly monitors the neighboring nodes operation by sending a discovery packet to them.

The present invention relies on sending continuously a small flow of information. It has the advantage of being resilient, simple and of not using too much bandwidth. It should still be operational in case there are several link failures in the ring and the wrapping is not implemented.

The messages (discovery packets) contain the description of only one node and two links to neighbouring nodes. This minimizes their size and makes their propagation faster. This algorithm is more scalable.

The present invention relates to the topology discovery algorithm which finds valuable applications in RPR and obviates the shortcomings of the above discussed prior art solutions. It is more resilient than Darwin and Alladin in the sense that it is still operational in case there are several link failures in the ring and the wrapping is not implemented. Even if wrapping is implemented, the propagation is still faster. It should be noted, however, that even though the algorithm will be described in detail in connection with RPR, its concept is equally applicable to many similar network architectures.

In another aspect, the invention resides in an apparatus for communicating network topology information among nodes on a packet ring network by way of topology discovery messages whose format comprises TTL field, immediate response request field, topology information type field, and node information field. The apparatus comprises a plurality of different timer settings and a packet sending module for sending a topology discovery message to itself in accordance with a first timer setting, for broadcasting a topology discovery message in accordance with a second timer setting and for sending a topology discovery message to neighboring nodes in accordance with a third timer setting. The apparatus further includes a packet receivi ng module for monitoring a topology discovery message on the ring and means for updating a topology image database and the plurality of timer settings in response to the received message.

The invention will be described in detail below in connection with RPR architecture. It should, however, be noted that the scope of the inventive concept to which patent monopoly is sought is defined by the claims appended herewith.

Figure 1 shows one example of a ring network without failure.

Figure 2 shows a similar ring network without wrapping which contains two failed connections.

Figure 3 shows a topology discovery packet format according to one embodiment of the invention.

Figures 4, 5 and 6 are flow charts of operations a node performs according to one embodi ment of the invention.

Figure 7 is a schematic block diagram of a node on a dual ring network according to one embodiment of the invention.

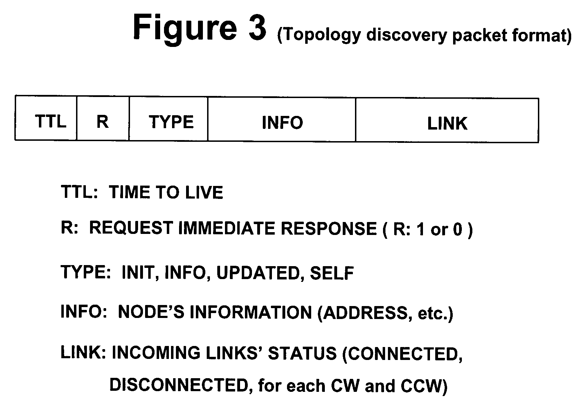

In accordance with one aspect of the invention, the algorithm uses only one discovery packet format and a set of timers. Figure 3 shows one embodiment of the topology discovery packet format. The format includes following fields:

| | |
|---|---|
| - Time to live (TTL) | 1-MaxTTL (e.g.=256) |
| - Request Immediate Response | R=1 or 0, |
| - TYPE | INIT(ialisation), INFO(rmation), UPDATED, SELF, |
| - Node's Information | ADDRESS, etc., |
| - Incoming Link Status | CONNECTED, DISCONNECTED for each CW and CCW |

The timers are "TopologyHelloTimer", "TopologyHereTimer", "TopologySelfTimer", and "TopologyHelloTimeout".

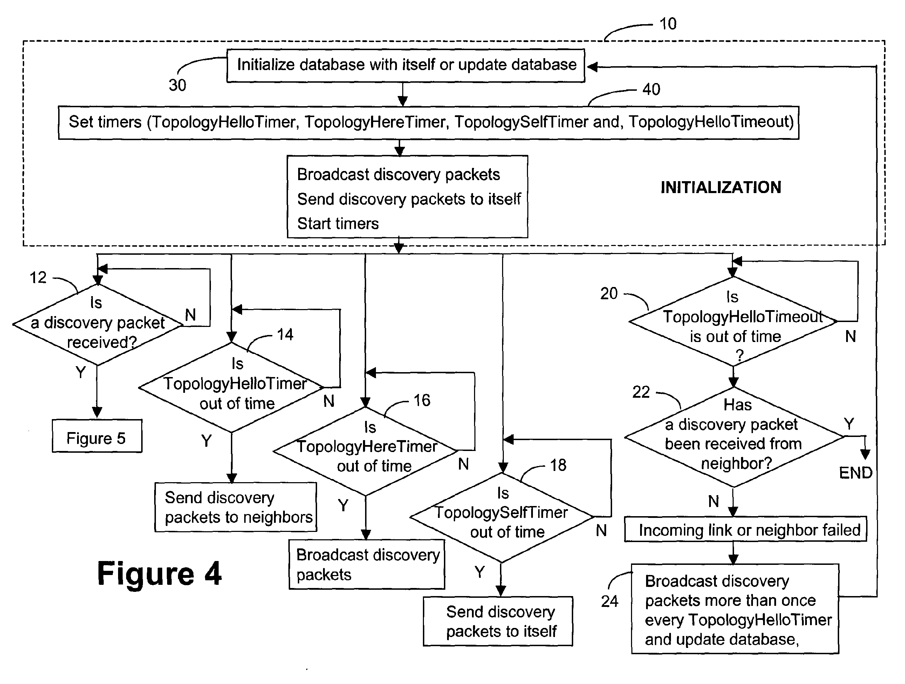

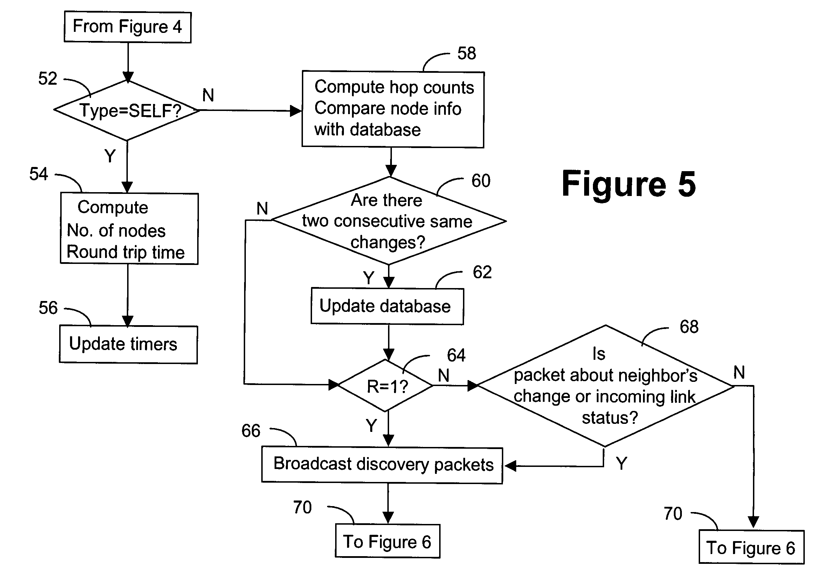

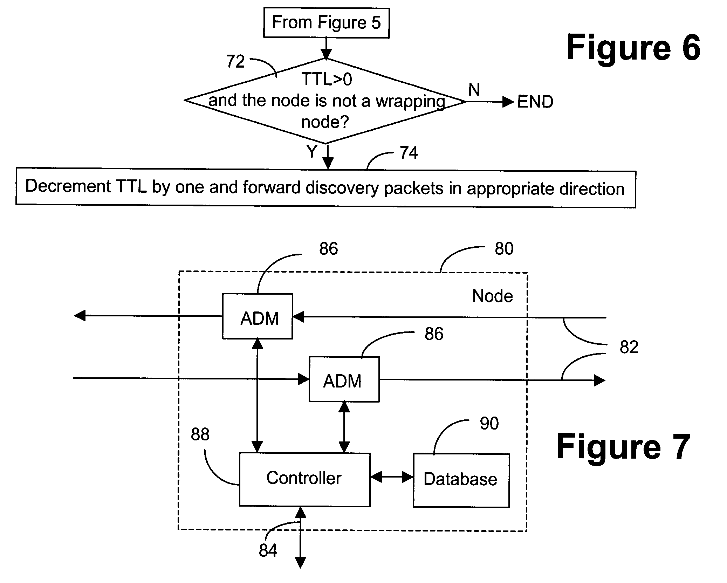

Figures 4 and 5 are flowcharts of the operation of the discovery protocol according to one embodiment. Upon reception of a topology discovery packet, every node updates its timers or database. Every node decrements TTL of a received topology discovery packet and forward it downstream unless the decremented TTL is 0. Every node sends or broadcasts a topology discovery packet at the timeout of every timer.

Referring to Figure 4, at the time of initialization 10, a node broadcasts a discovery packet (TTL=MaxTTL, R=1, TYPE=INIT, Node's information=own address, etc, link status=connected for both CW and CCW). Broadcast topology discovery packets have TTL set to Max which could be any number more than one and usually up to but not limited to 256 after initialization. By setting R=1, the node requests an immediate response from each node on the ring for update of each node's information. At the same time, the node also sends (broadcasts) a topology discovery packet (TTL=MaxTTL, R=0, TYPE=SELF, Node's information=own address, etc, link status=connected for both CW and CCW) to itself. By sending a packet to itself, the TTL can be used to measure a number of hops between the nodes in the ring. A SELF packet is also used to calculate round trip time which is in turn used for updating a variety of timers as will be described below.

Referring again to Figure 4, during operation at 12, a topology discovery packet is received. The timers are running concurrently and, at 14, upon expiration of the TopologyHelloTimer, each node sends a topology discovery packet (TTL=MaxTTL, R=0, TYPE=INFO, Node's information=own address, etc, link status=connected for both CW and CCW) to its neighbours. This is conveniently called a "hello" discovery packet.

At 16, each node also regularly (upon each expiration of TopologyHereTimer) broadcasts its information to all the other nodes on the ring by using a topology discovery packet (TTL=MaxTTL, R=0, TYPE=INFO, Node's information=own address, etc, link status=connected for both CW and CCW). This will re-evaluate the total number of nodes on the ring.

At 18, upon every expiration of TopologySelfTimer, each node send a topology discovery packet (TTL=MaxTTL, R=0, TYPE=SELF, Node's information=own address, etc, link status=connected for both CW and CCW) to itself. A SELF packet is used to calculate round trip time and to update the timers.

A link or node failure is detected by a downstream neighbour. Therefore, at 20 upon a timeout of "TopologyHelloTimeout", if no topology discovery packet has been received from the neighbour at 22, it indicates either a link failure or a neighbour node failure. The node broadcasts to the rest of the nodes on the ring by using a topology discovery packet (TTL=MaxTTL, R=0, TYPE=UPDATED, Node's information=own address, etc, link status=connected for both CW and CCW). This broadcast is performed more than once every TopologyHelloTimer. It also updates its database at 24.

Referring to Figure 5, if the received packet is a SELF packet at 52, it is used to calculate the total number of nodes on the ring at 54, which, at 56, will be used for set-up or update of timer values for "TopologyHelloTimer", "TopologyHereTimer", "TopologySelfTimer", and "TopologyHelloTimeout". At 52, if the received packet is not SELF, it could have a TYPE of "INFO", "UPDATED" or "INIT". Packets with "INFO" or "UPDATED" indicate changes in status of some nodes or links. Therefore, at 58 it calculates the hop counts and compares the node's information with that stored in its database. If two consecutive packets with same changes are received at 60, the node updates its database at 62. This will prevent a premature updates of database.

At 64, if the received packet (non SELF) contains R=1 (request for immediate response), it broadcasts a topology discovery packet at 66. If R is not 1 at 64 but if it is determined at 68 that the packet is from one of the two the neighbors and if it indicates changes in that neighbor or if an incoming link status change is detected, then at 66 discovery packets are broadcast about the changes. Topology discovery packets are always sent on both ringlets.

As indicated in Figure 5, after updating databases and broadcasting discovery packets, steps are performed at 70 which are shown in Figure 6. Thus referring to Figure 6, if TTL>0 and the node is not a wrapping node at 72, the node decrements TTL by one and forwards the discovery packet downstream at 74. If wrapping is implemented in the network, the discovery packet is forwarded in the same direction at non wrapping node. If the current node is a wrapping node, only data packets are wrapped but not the discovery packets. If steering is performed, the direction may be different.

Following is the pseudo code of the proposed discovery algorithm. PARAMETERS:

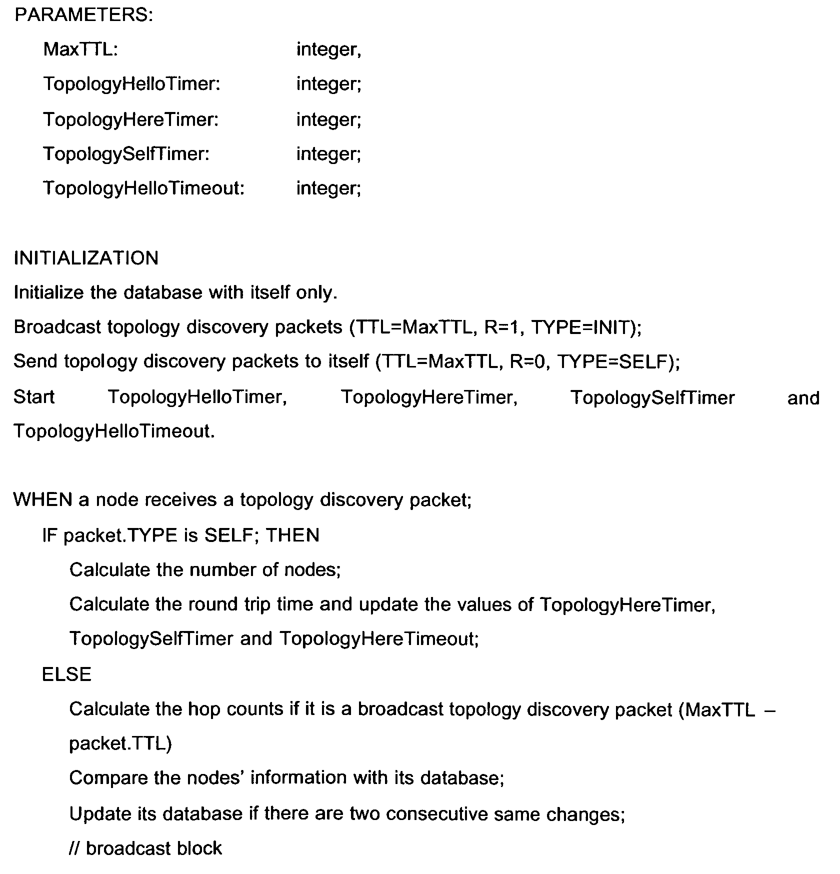

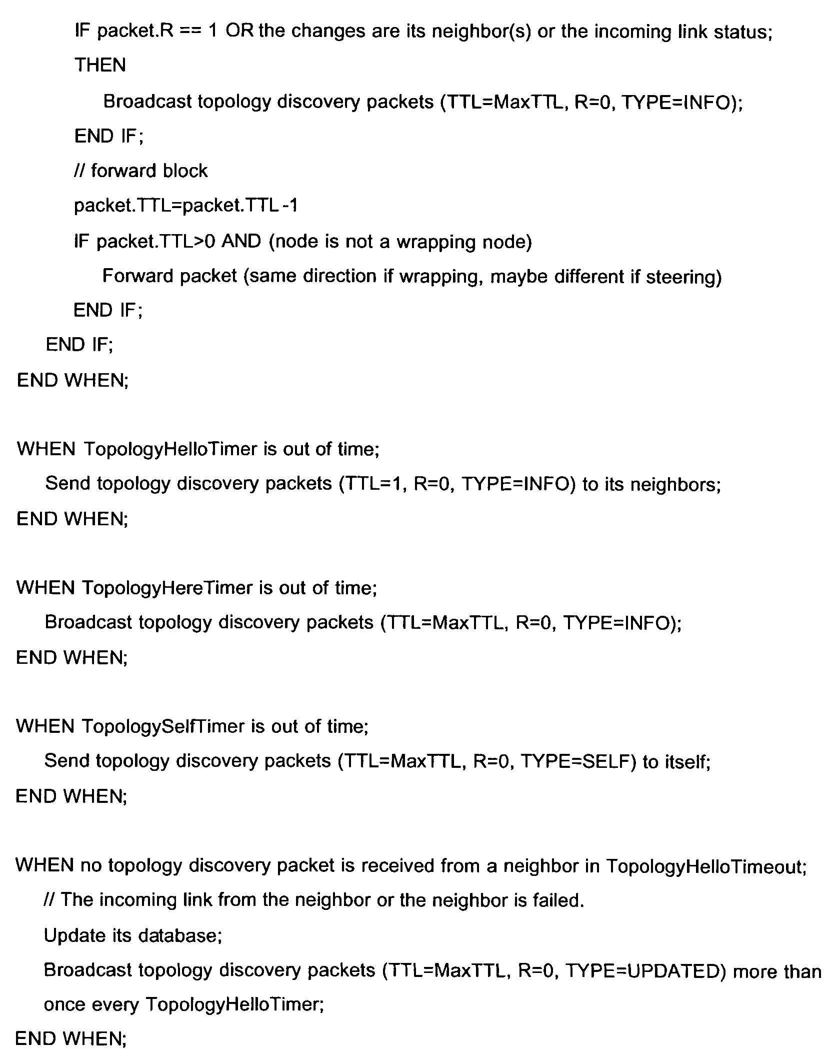

Figure 7 is a schematic block diagram of a node 80 on a ring according to one embodiment of the invention. The node receives and sends packets from and/to each of the ringlets 82 for the purpose of transporting them through local traffic 84. It comprises a pair of add/drop multiplexer (ADM) 86 which functions as a packet receiver and packet transmitter. One ADM is provided for each ringlet for each direction. A controller 88 processes topology discovery packets to be transmitted in one or the other ringlet and monitors received topology discovery packets on the ringlets. By reading fields of the received packet, the controller determines the action to be performed, including a step of comparing new topology image with the one stored in the database 90 and a step of updating the database. The controller also performs a variety of actions in response to the different timer settings contained therein.

The present invention relies on sending continuously a small flow of information. It has the advantage of being resilient, simple and of not using too much bandwidth. It is more resilient than Darwin and Alladin in the sense that it is still operational in case there are several link failures in the ring and the wrapping is not implemented. Even if wrapping is implemented, the propagation is still faster. The messages contain the description of only one node and two links, which minimizes their size and make this algorithm more scalable. The amount of control traffic is not necessarily an issue, but it is best to reduce it for the same processing complexity. It is the best trade-off between resilience to several failures, com plexity, and amount of traffic. The time required to propagate a change is minimized also in the non-failure case.

Beyond RPR, the argument of performance generalizes to any protocol applied to the ring architecture.

Probing the network traffic would allow to capture control packets and analyze their format. It would be easy to detect usage of the same format, since this kind of traffic is not encrypted.

An additional detection source is the claiming of failure resilience in case wrapping is not implem ented.

## Claims

1. Method of communicating network topology information among nodes in a packet ring network comprising a plurality of nodes and links, each node holding a topology image of the network on a database, said method comprising steps of:
monitoring a topology discovery message on the ring;
determining that the topology discovery message is from itself, from neighboring nodes or it is a broadcast topology discovery message from any of other nodes;
updating a plurality of timer settings in response to the monitored topology discovery message if it is from itself, and
updating the database in response to the monitored topology discovery message if it is either from the neighboring nodes or from any of other nodes.

2. Method according to claim 1, further comprising a step of:
sending a topology discovery message containing local topology information to itself at expiration of the first timer setting.

3. Method according to claim 1 or claim 2, further comprising a step of:
sending a topology discovery message to neighboring nodes at expiration of the second timer setting.

4. Method according to any one of claims 1 to 3, further comprising a step of:
broadcasting on the rings a topology discovery message containing local topology information and requesting topology information from all the nodes on the ring at expiration of the third timer setting.

5. Method according to any one of claims 1 to 4, further comprising steps of:
verifying that no topology discovery message has been received from the neighbouring nodes at expiration of the fourth timer setting, and
broadcasting a topology discovery message containing new local topology information informing nodes on the ring that the topology image of the network has changed.

6. Method according to any one of claims 1 to 5, further comprising steps of:
broadcasting the topology discovery message more than once within each of the second timer setting.

7. Method according to any one of claims 1 to 6, further comprising steps of:
calculating the number of nodes on the ring and round trip time, using the topology discovery message received from itself, and
updating the plurality of timer settings in accordance with the calculated results.

8. Method according to any one of claims 1 to 7, further canprising steps of:
determining that topology information of the neighboring nodes or incoming link status has changed;
broadcasting a topology discovery message containing new local topology information informing nodes on the ring that the topology image of the network has changed, and
updating the database.

9. Method according to any one of claims 1 to 8, further comprising steps of:
calculating topology information of other nodes, using topology discovery messages received from other nodes on the ring;
comparing the topology information of the other nodes with that stored in the database, and
updating the topology information of any of the other nodes upon reception of two consecutive identical topology discovery messages from such other nodes.

10. Method according to any one of claims 1 to 9, further comprising a step of:
forwarding the monitored topology discovery message from itself or from any nodes other than the neighboring nodes in a selected direction.

11. Method according to any one of claims 1 to 10, further comprising steps of:
at initialization,
setting the plurality of timer settings;
sending a topology discovery message containing local topology information to itself and all the nodes on the ring;
monitoring topology discovery messages on the ring, and
updating the database and the plurality of timer settings in response to the monitored topology discovery messages.

12. Method according to any one of claims 1 to 11, wherein the step of determining that the topology discovery message is from itself, from neighboring nodes or it is a broadcast topology discovery message from any of other nodes is performed by reading any of a plurality of format fields of a topology discovery message.

13. Apparatus for communicating network topology information among nodes on a packet ring network by way of topology discovery messages whose format comprises TTL field, immediate response request field, topology information type field, and node information field, comprising:
a plurality of different timer settings;
a packet sending module for sending a topology discovery message to itself in accordance with a first timer setting, for broadcasting a topology discovery message in accordance with a second timer setting and for sending a topology discovery message to neighboring nodes in accordance with a third timer setting;
a packet receiving module for monitoring a topology discovery message on the ring;
means for updating a topology image database and the plurality of timer settings in response to the received message.

14. Apparatus according to claim 13, further comprising:
means for verifying the received topology discovery message to see if it is from itself, and
means for updating the timer settings in response to the received message from itself.

15. Apparatus according to any one of claims 13 or 14, further comprising:
the database holding a topology image of the packet ring network;
means for verifying the received topology discovery message to see if it is from neighboring nodes or other nodes on the ring;
means for comparing the received topology discovery message with the image stored in the database, and
means for updating the topology image database in response to the received message.

16. Apparatus according to claim 15, further comprising:
means for determining two consecutive identical received topology discovery messages, and
means for updating the topology image database in response to the received messages.
